# EUROPEAN PATENT APPLICATION

(11) **EP 2 848 541 A1**
(43) Date of publication of application: **18.03.2015**
(21) Application number: 12876362.0
(22) Date of filing: 10.05.2012
(51) Int. Cl.: B65B 51/04

(54) **CONTINUOUS DISK-TYPE CLIPPER DEVICE**

(71) Applicant: Shijiazhuang Success Machinery Electrical Co. Ltd., Hebei 051530 (CN)
(72) Inventor: TANG, Qiuming, Shijiazhuang Hebei 051530 (CN)
(74) Representative: Groth & Co. KB
(86) International application number: PCT/CN2012/000630
(87) International publication number: WO 2013/166622

(57) **Abstract**

The present invention discloses a continuous disc type card-punching device, comprising a rotary punching machine platform, which comprises a base with a rotation axis for driving the rotation of drive gear by a motor, a support plate provided at the top of the rotation axis; the rotary punching machine platform also comprising a control system; wherein, the support plate has at least two single-cylinder pneumatic punching machines provided thereon, startup and shutdown of each single-cylinder pneumatic punching machine is controlled by a corresponding touch switch with respect to a first position and a second position. The present invention has a simple structure and higher efficiency and reliability, using less air, and has a lower energy consumption, it is easy to organize production, the cost of card-punching and maintenance is lower, and degree of automation is high. The card-punching machine disposed at the inner ring is provided with a larger diameter, and the card-punching machine disposed at the outer ring is provided with a smaller diameter, this achieves a variety of card-punching in the same machine.

## Description

### Technical Field

The present invention relates to the technical field of emulsion explosive, cartridge and food sausage, and flexible packaging industry, particularly, relates to a single-cylinder single-claw double-card pneumatic punching machine.

### Background of the Invention

In the respect of disc type card-punching device, US4821485, US5020298, US5259168, US5471815 and US5644896 disclose a rotating disc type card-punching machine consist of a plurality of six-cylinder card-punching machine, this combination of six-cylinder card-punching machine has a large numbers of cylinders, the action of punching card using the structure principle of the timing sequence, this affects the efficiency and reliability of card-punching process, the large gas consumption and high energy consumption.

For the above deficiencies existed in the prior art, the present invention is provided.

### Summary of the Invention

One object of the present invention is to provide a continuous disc card-punching device.

In order to achieve the above-stated object, one embodiment of the present invention is to provide a continuous disc type card-punching device, comprising a rotary punching machine platform, which comprises a base with a rotation axis for driving the rotation of drive gear by a motor, a support plate provided at the top of the rotation axis; the rotary punching machine platform also comprising a control system; the support plate has at least two single-cylinder pneumatic punching machines provided thereon, startup and shutdown of each single-cylinder pneumatic punching machine are controlled by corresponding touch switches with respect to a first position and a second position.

In a class of embodiment, the touch switches comprise a first mechanical valve for the first position, a second mechanical valve for the second position, arranged to be side by side with the first mechanical valve; a first touch block, arranged to correspond to the first mechanical valve, and a second touch block, arranged to correspond to the second mechanical valve.

In a class of embodiment, the first mechanical valve and the second mechanical valve are fixed on a rotating disc; the rotating disc is provided on a rotation axis and adapted for operating synchronously with the support plate; the first touch block and the second touch block are fixed on a fixing plate.

In a class of embodiment, the touch switch is adapted for controlling the startup and the shutdown of the single-cylinder pneumatic punching machine at the first position and the second position respectively through a 2-positions 5-through holes double pneumatic control valve.

In a class of embodiment, at least one single-cylinder pneumatic card-punching machine is uniformly disposed at the inner ring of the support plate; and at least two single-cylinder pneumatic card-punching machine are uniformly disposed at the outside ring of the support plate, wherein, the diameter of the single-cylinder pneumatic card-punching machine disposed at the inner ring is larger than that at the outside ring.

In a class of embodiment, the rotary punching machine platform has a first detection means for detection of no volume state, a second detection means for detection of jammed volume state, and a detection means for detection of improper claw state provided thereon, all of which are connected to the control system.

In a class of embodiment, the single-cylinder pneumatic card-punching machine, comprising an air cylinder adapted for pushing a gantry moving frame to move downward and meanwhile driving a snap action moving device, a card-pushing sheet and a cutter to move down, and tuck a retaining clamp and a folding clamp until the card punching is completed, and adapted for driving the card-pushing sheet and cutter to move upward and releases the folding clamp when the gantry moving frame moves up, thereby completing a punching process.

In a class of embodiment, a connecting frame is connected to a working end face of the air cylinder, and a lower part of the connecting frame has connecting plates provided at both sides thereof, the lower part of the connecting frame has an n-type gantry moving frame provided in the middle thereof in an interleaved manner, a piston rob of the air cylinder is arranged to extend through the connecting frame to connect with the n-type gantry moving frame ;a retaining clamp and a folding clamp are provided at the bottom of the connecting frame.

In a class of embodiment, the folding clamp has a material extrusion means provided therein; the material extrusion means has a claw sheet with a shape coordinating with the folding clamp, a width of the claw sheet is wider than that of the folding clamp.

In a class of embodiment, a card-pushing sheet and a cutter are disposed under the n-type gantry moving frame, a lower end of the n-type gantry moving frame has pulleys provided at both sides thereof, the pulleys are adapted for sliding in slideways of the retaining clamp and the folding clamp respectively;

In a class of embodiment, the connecting frame has snap action moving devices provided at both sides thereof, and the snap action moving device and the n-type gantry moving frame are arranged in a square crossing manner.
the connecting frame comprises a base plate, fixed at a working end of the cylinder by bolted connection, both sides of the lower surfaces of the base plate respectively have an integrated connecting plate provided thereon, a lower end of the connection plate has biforked fixing legs; and the connecting plate is in the shape of an inverted Y, the fixing legs have fixing holes provided thereon, and a central hole is provided at a central section of the base plate for a piston rod to pass through; rail holes are provided on the surfaces of connecting plates at both sides; a multipurpose pin shaft is provided between the rail holes on the connecting plates at both sides, the multipurpose pin shaft is adapted for moving up and down in the rail holes, and the multipurpose pin is located under the n-type gantry moving frame; a fixed block is provided on the multipurpose pin, the card-pushing sheet and the cutter are assembled on the fixed block.

In a class of embodiment, the cutter is in hook-type or cut-type.

In a class of embodiment, the retaining clamp and the folding clamp are coordinated with each other in an embedded manner, and the retaining clamp is in claw type, two pin shaft holes are provided on two top ends of the retaining clamp, the pin shaft holes are aligned with fixing holes in the connecting frame and fixed by pin shaft; a guide block is provided on one side of the retaining clamp, a chute is provided in the guide block, the chute is adapted for accomodatinga foot pulley provided on a vertical side of the n-type gantry moving frame, a snap molding is embedded in a corner of the retaining clamp.

In a class of embodiment, the guide block and the retaining clamp are arranged in an interleaved embedded manner, the guide block is arranged to abut against the retaining clamp; a guide roller is provided on one side of the chute, and a guide bearing is provided on the other side of the chute, the guide bearing is sleeved on the pin shaft disposed on the fixing leg and arranged to coordinated with the guide roller to guide the vertical side of the n-type gantry moving frame move up and down in the chute; a cutter guide slot is provided in the retaining clamp for accommodating and guiding the hook-type cutter, guide slots are respectively provided at the both sides for accommodating and guiding the card-pushing sheet.

In a class of embodiment, the folding clamp comprises a crab claw, two reversely-extending lateral plates are formed at both back sides of the crab claw, pin shaft holes are provided at the ends of the lateral plates, the pin shaft holes are aligned with the fixing holes at the other side of the connecting frame and fixed by the pin shaft; a space between the two lateral plates forms a sildeway, the slideway is adapted for accommodating another foot pulley on the n-type gantry moving frame.

In a class of embodiment, the snap action moving device comprises a U-shape guide rail which is formed by two L-shape lower parts connected and respectively located on the left and right sides, the vertical side of the L-shape guide rail is fixed on one side of the base plate of the connecting frame, and also fixed on the connecting plate which is on the lower surface of the connecting frame through a rail supporting frame, a snap guide device is provided on one end of the vertical side of the L-shape guide rail, a mounting plate is provided on the inner side of the L-shape guide rail, the rail supporting frame is fixed at the top of the mounting plate, a strip hole is provided in the central section of the mounting plate, a spring is provided in the upper part of the inner strip hole, a card-punching device is assembled in the strip hole of the mounting plate through a pin shaft and a bearing, and arranged to keep compressing the spring by the multipurpose pin to deliver snap; the end of the horizontal side of the L-shape guide slot is fixed to the retaining clamp or folding clamp together by a guide slot fixed block and a mounting plate.

In a class of embodiment, a card-punching retaining device is provided under the card-punching device, and the card-punching retaining device is assembled on the card-punching guide rail and the mounting plate, a snap retaining block is provided under the bottom of the card-punching retaining device and/or the card-punching device.

The advantage of the present invention is that the present invention compared with the prior arts has a simple structure and higher efficiency and reliability, using less air, and has a lower energy consumption, it is easy to organize production, the cost of card-punching and maintenance is lower, and degree of automation is high.

The card-punching machine disposed at the inner ring is provided with a larger diameter, and the card-punching machine disposed at the outer ring is provided with a smaller diameter, this achieves a variety of card-punching in the same machine.

### Brief Description of the Drawings

The invention will be described in greater detail with references to the appended drawings in order to make the invention and the advantages understood better. However, the drawings described herein are intended to provide a further understanding of the present invention, constituting part of the invention. The embodiments and their descriptions of the present invention are for explaining the present invention, which do not constitute undue limitation of the present invention, wherein:
Fig. 1 is a general assembly view of the present invention;
Fig. 1a is a top view of the support plate in Fig. 1;
Fig. 1b is a partial structure schematic view of touch switch with respect to a first position and a second position in Fig. 1;
Fig. 2 is a general assembly view of the single-cylinder pneumatic card-punching machine in Fig. 1;
Fig. 3 is a lateral view of Fig. 2;
Fig. 4 is an exploded view of Fig. 2;
Fig. 5 is an exploded view of Fig. 3;
Fig. 6a, Fig. 6b and Fig. 6c are structure schematic views of the connecting frame in Fig. 2;
Fig. 7a and Fig. 7b are structure schematic views of the folding clamp in Fig. 2;
Fig. 8a and Fig. 8b are structure schematic views of the combined slideways;
Fig. 8c is a structure schematic view of the material extrusion means;
Fig. 9 is a structure schematic view of the present invention in Fig. 2, in a stowed state.

### Detailed Description of the Preferred Embodiments

The invention will be described in greater detail with references to the appended drawings.

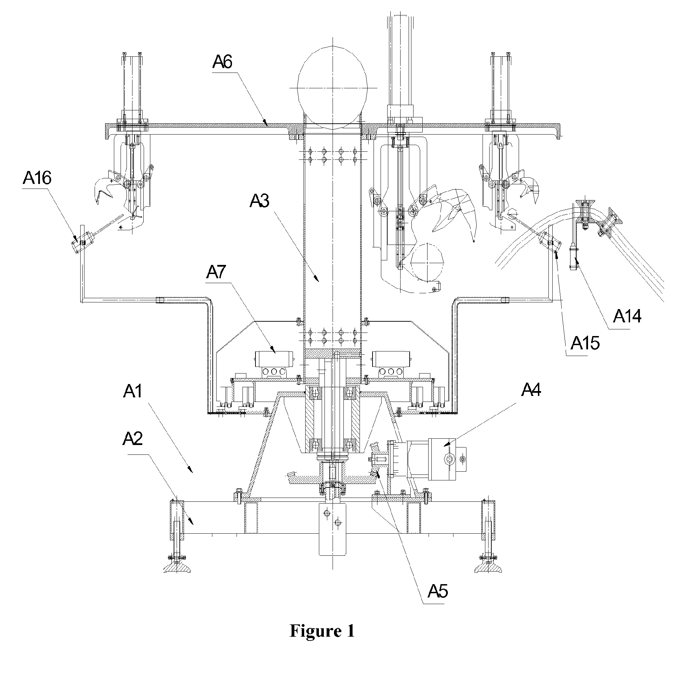

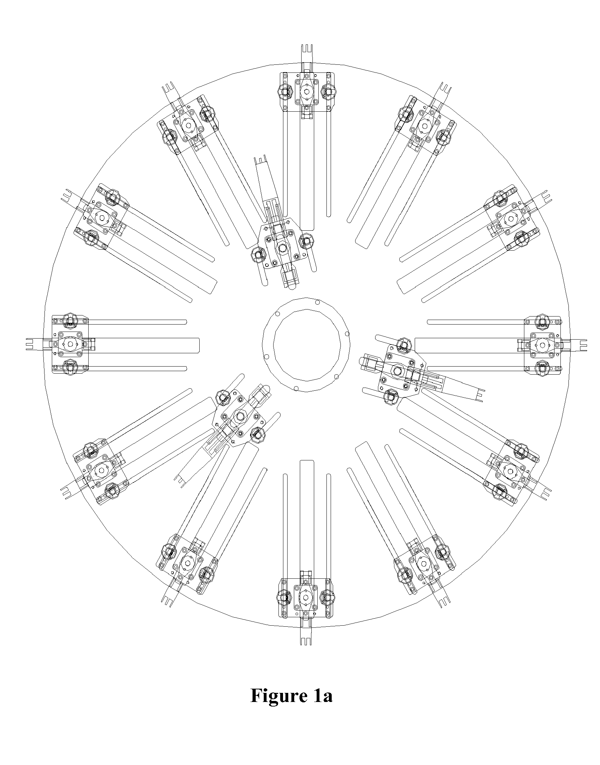

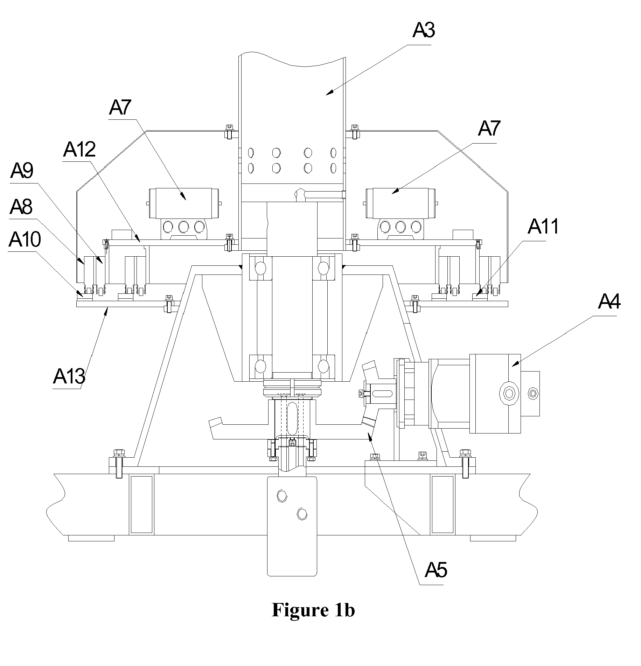

Fig.1 is a general assembly view of the present invention, as shown in Fig. 1, the continuous disc type card-punching device of the present invention, comprising a rotary punching machine platform A1, which comprises a base A2 with a rotation axis A3 for driving the rotation of drive gear A5 by a motor A4, and a support plate A6 provided at the top of the rotation axis A3; the rotary punching machine platform A1 also comprises a control system; twelve single-cylinder pneumatic card-punching machines are uniformly disposed at the inner ring of the support plate A6, and three single-cylinder pneumatic card-punching machines are uniformly disposed at the outside ring of the support plate A6 (shown in Fig. 1), the diameter of the single-cylinder pneumatic card-punching machine disposed at the inner ring is larger than that at the outside ring, startup and shutdown of all single-cylinder pneumatic punching machines are controlled by corresponding touch switchs with respect to a first position and a second position. The touch switch is adapted for controlling the startup and the shutdown of the single-cylinder pneumatic punching machine at the first position and the second position respectively through a 2-positions 5-through holes double pneumatic control valve A7.

Fig. 1b is a partial structure schematic view of touch switch with respect to a first position and a second position in Fig. 1; according to Fig, 1b, the touch switch comprises a first mechanical valve A8 for the first position, a second mechanical valve A9 for the second position, arranged to be side by side with the first mechanical valve A8; a first touch block A10, arranged to correspond to the first mechanical valve A8, and a second touch block A11, arranged to correspond to the second mechanical valve A9.

The first mechanical valve A8 and the second mechanical valve A9 are fixed on a rotating disc A12; the rotating disc A12 is provided on a rotation axis A3 and adapted for operating synchronously with the support plate A6; the first touch block A10 and the second touch block A11 are fixed on a fixing plate A13.

Corresponding touch switches with respect to a first position and a second position are provided on the positions on the rotating disc A12 and the fixing plate A13 corresponding to the card-punching machine disposed at the inner ring of the support plate A6, the structure of said touch switches with respect to a first position and a second position are the same with touch switches with respect to a first position and a second position disposed at the outer ring, they differ in the manual setting of the first position and the second position, and it will not be repeated here.

The rotary punching machine platform A1 has a first detection means A14 for detection of no volume state, a second detection means A15 for detection of jammed volume state, and a detection means A16 for detection of improper claw state provided thereon (shown in Fig. 1).

According to Fig. 1, Fig.1a and Fig.1b, the working process of the continuous type card-punching device of the present invention is that when the first mechanical valve A8 for the first position touches the first touch block A10, a pneumatic control signal is produced, said signal controls the 2-positions 5-through holes double pneumatic control valve A7 to change the direction thereof, and the single-cylinder pneumatic card-punching machine on the support plate A6 is tucked, moves downward the card and punch the card, with the rotation of the rotation axis A3, after the first mechanical valve A8 for the first position and the second mechanical valve A9 for the second position rotate by a certain angle, when the second mechanical valve A9 touches the second touch block A11, a pneumatic control signal is generated for controlling the 2-positions 5-through holes double pneumatic control valve change the direction thereof, and controlling the single-cylinder pneumatic card-punching machine to conduct cutting, releasing and casting the volume, and so on.

The specific structure and working process of single-cylinder pneumatic card-punching machine will be described in greater detail below:

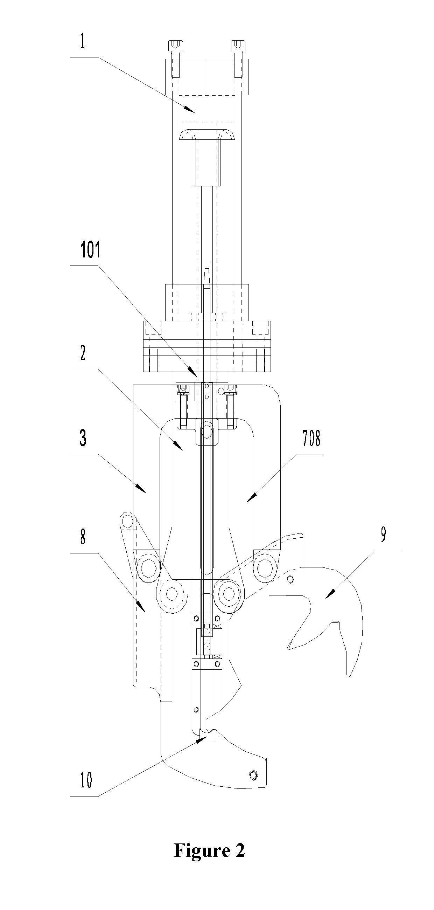

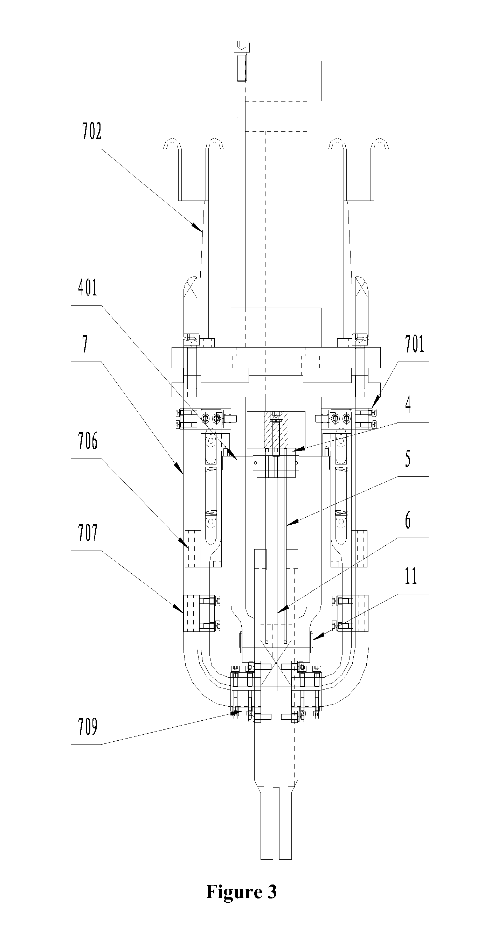

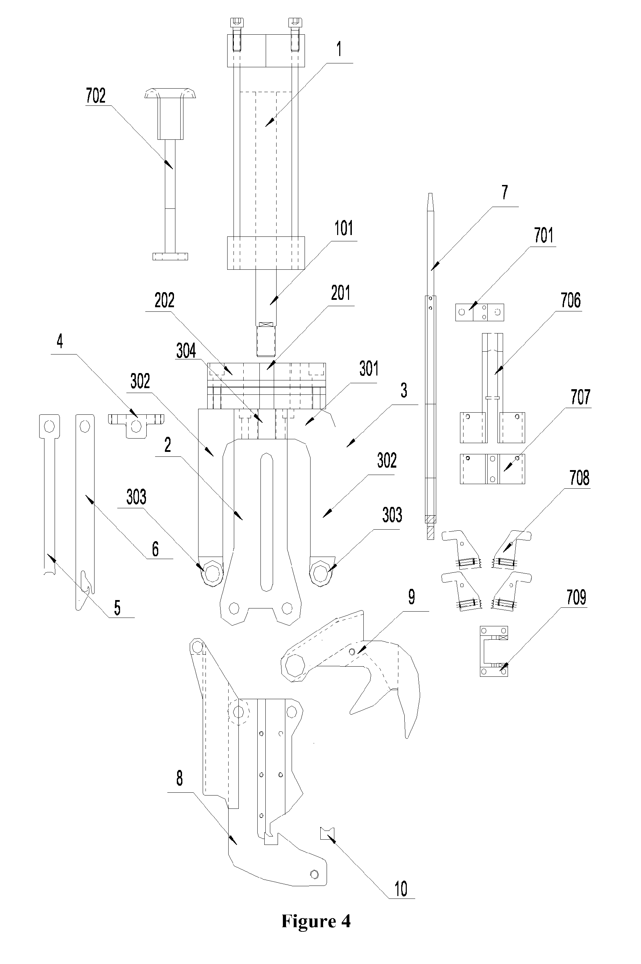

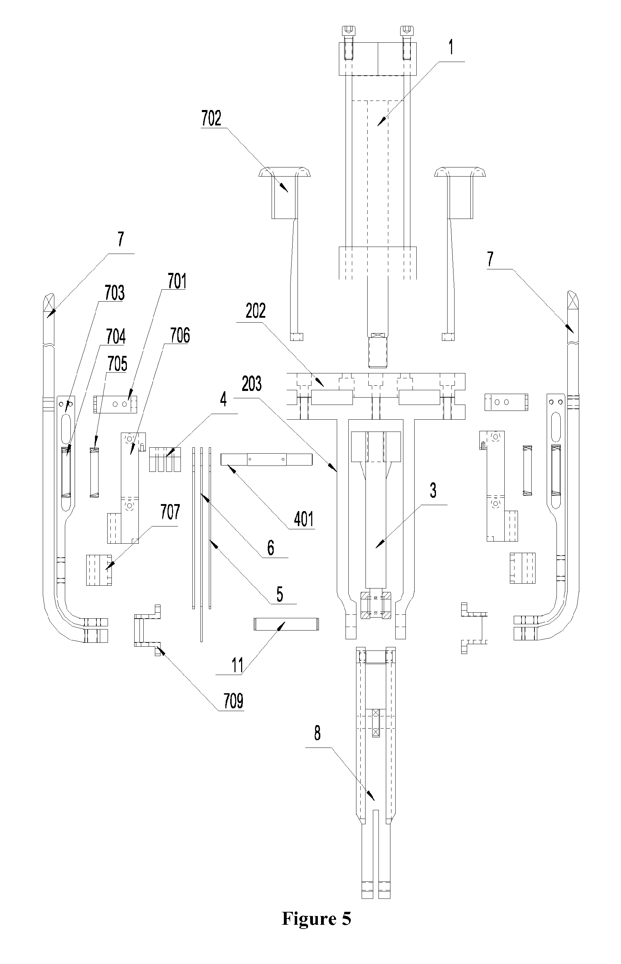

Fig. 2 is a general assembly view of the single-cylinder pneumatic card-punching machine, Fig. 3 is a lateral view of Fig. 2, Fig. 4 is an exploded view of Fig. 2 and Fig. 5 is an exploded view of Fig. 3; according to Fig. 2, 3, 4, 5, the double-card punching machine with a single-cylinder and a single-claw of the present invention comprises a linear cylinder 1, and the working end face of the linear cylinder 1 is connected to a connecting frame 2 through a screw connection; a central hole 201 (showed in Fig. 5c) allowing the piston rob 101 of the air cylinder 1 to pass through is provided in the central section of the connecting frame 2; after the piston rob 101 passes through the central hole 201, the end of the piston rob 101 is connected to an n-type gantry moving frame 3.

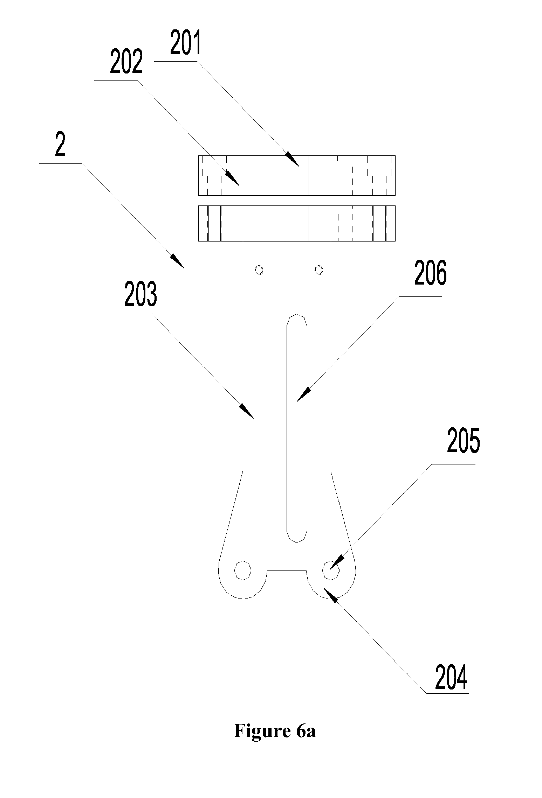

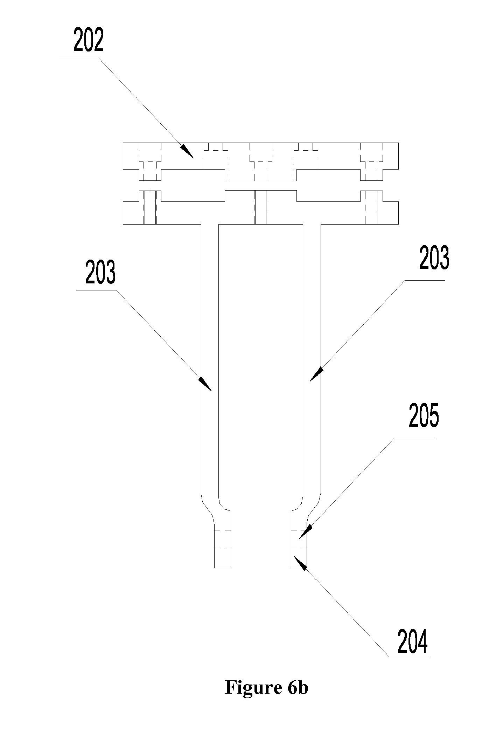

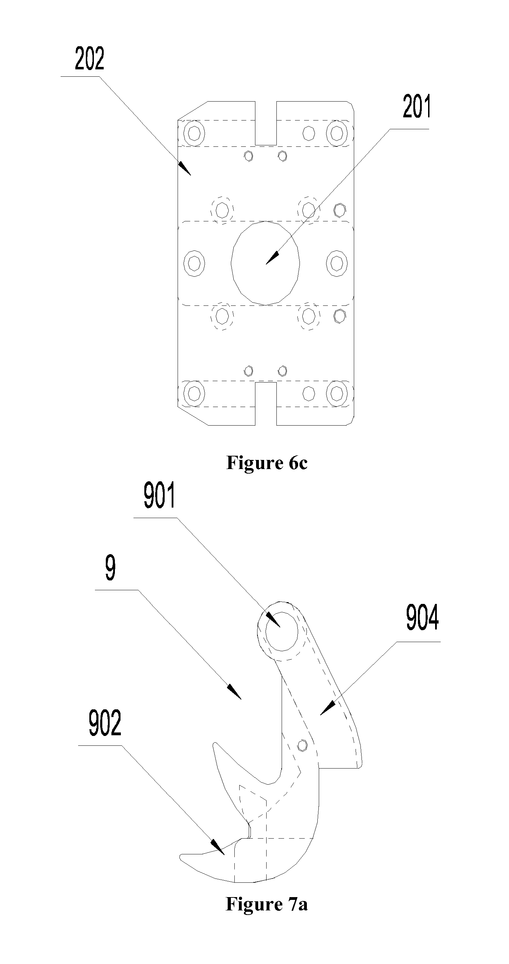

As shown in Fig. 6a, Fig. 6b and Fig. 6c, the connecting frame 2 comprises a base plate 202 which is fixed at the working end of the cylinder by bolted connection (showed in Fig. 6c), both sides of the lower surfaces of the base plate 201 respectively have an integrated connecting plate 203 provided thereon, a lower end of the connection plate 203 has biforked fixing legs; and the connecting plate 203 is in the shape of an inverted Y, the fixing legs 204 have fixing holes 205 provided thereon, and a central hole 201 is provided at a central section of the base plate 202 for a piston rod to pass through. Rail holes 206 are provided on the surfaces of the connecting plates 203 at both sides respectively.

The n-type gantry moving frame comprises a horizontal side 301 and two vertical sides 302 respectively at both sides, pulleys 303 are provided at the bottom of the two vertical sides 302 respectively, a through-hole 304 is provided on the horizontal side 301 to accommodate and fix the piston rob 101 of the cylinder.

The n-type gantry moving frame 3 is provided under the connecting frame 2, a fixed block 4 is fixed under the horizontal side 301 by a multi-purpose pin shaft 401, the both ends of the multi-purpose pin shaft 401 are arranged to extend out of the Rail holes 206 in the connecting plate 203 of the connecting frame 2, and said ends are sealed with nuts.

Each of the both sides of the fixed block 4 is provided with a card-pushing sheet 5, a hook-type cutter is fixed between card-pushing sheets 5 on the both sides of fixing block 4; when using the punching machine, the n-type gantry moving frame moves down with the piston rob 101; because of the restriction of the multi-purpose pin shaft 401 and the rail slot hole 206, the n-type gantry moving frame keeps moving in the vertical direction; the fixed block 4 may guarantee that the card-pushing sheets 5 and the hook-type cutter 6 will not deform after multiple use.

The snap action moving device comprises a U-shape card-pushing guide rail 7 disposed under the connecting frame 2, the U-shape card-pushing guide rail 7 is formed by two L-shape guide rails whose lower sides are butted with each other, the lower sides of L-shape guide rails are disposed under the connecting frame 2. The n-type gantry moving frame and the U-shape card-pushing guide rail are disposed in a square crossing manner.

The vertical side of the L-shape guide rail is fixed on one side of the base plate 203 of the connecting frame 2, and fixed to the connecting plate 203 on the lower surface of the connecting frame 2 by the rail supporting frame 701, snap action guidance device 702 is assembled on the end part of the vertical side of the L-shape guide rail, a mounting plate 703 is provided at the inner side of the L-shape guide rail, the rail supporting frame 701 is fixed at the top of the mounting plate 703, a strip hole 704 is disposed on the central section of the mounting plate 703, a spring 705 is provided at the upper part in the strip hole 704, a card-pushing device 706 is assembled in the strip hole 704 of the mounting plate 703 through a pin shaft and a bearing, and the card-punching device 706 arranged to keep compressing the spring 705 by the multi-purpose pin shaft 401 to complete the card-pushing mission.

A card-pushing retaining device 707 is provided under the card-pushing device 706, and the card-punching retaining device 707 is assembled on the card-pushing guide rail 7 and the mounting plate 703, a snap retaining block 708 may be assembled on the card-pushing retaining device and also may be assembled at the bottom of the card-punching device side by side at the same time.

The end of the horizontal side of the L-shape guide rail is fixed to the mounting plate 703 and folding clamp 9 or retaining clamp 8 through guide rail fixed block 709.

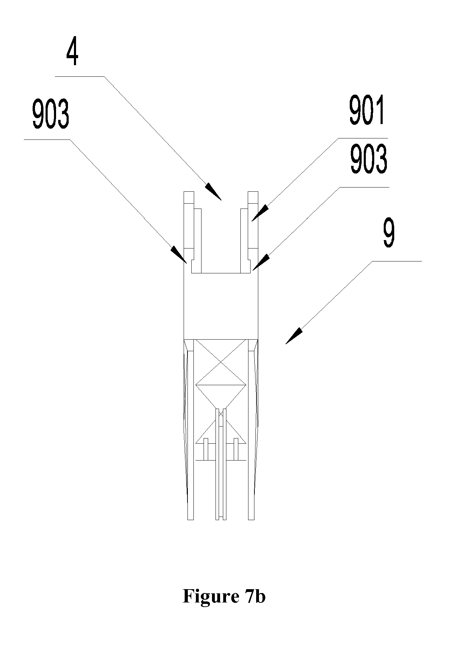

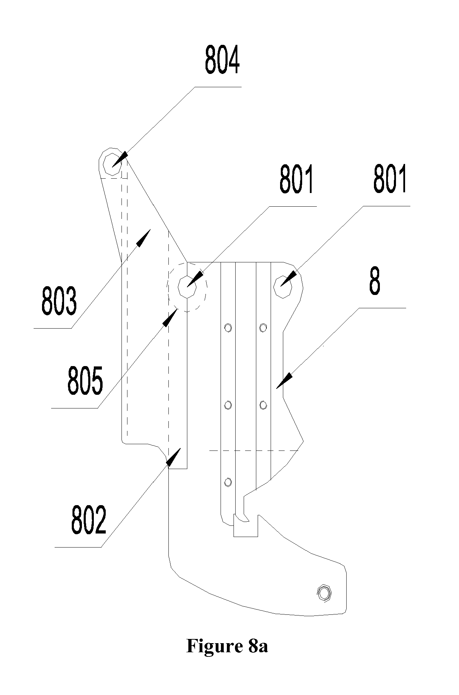

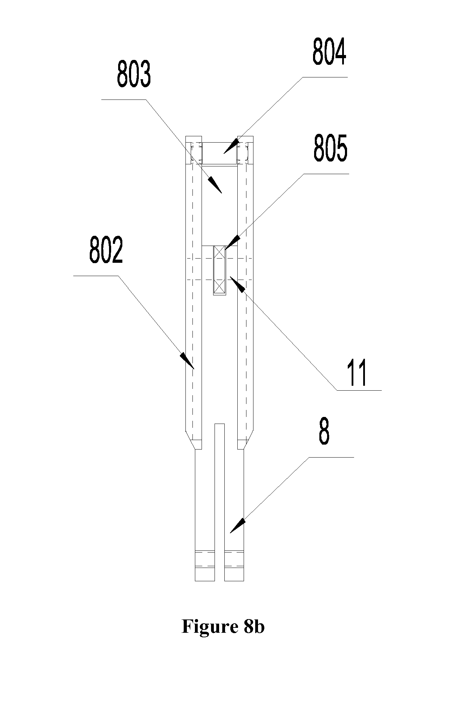

As shown in Fig.7a, Fig.7b, Fig.8a and Fig.8b, the folding clamp of the present invention comprises a retaining clamp 8 and a folding clamp 9 coordinated with each other in an embedded manner, the retaining clamp 8 is claw typed, two pin shaft holes 801 are provided on the both top ends of the retaining clamp 8, the pin shaft holes 801 are aligned with the fixing holes 205 in the fixing leg 204 on the lower end of the inverted Y-type connecting frame 203, and fixed by the pin shaft 11; a guide block 802 is provided on one side of the retaining clamp 8, the guide block 802 and the retaining clamp 8 are disposed in an interleaved embedded manner, allowing the guide block 802 to abut against the retaining clamp 8 and to reinforce the remaining clamp 8, so as to resist the effect of the impact force from the folding clamp 9. A snap molding 10 is embedded in the corner of the hook-type retaining clamp 8.

Chute 803 is disposed in the guide block 802, said chute 803 is arranged to be adapted for accommodating the foot pulley 303 on the vertical side 302 of the n-type gantry moving frame 3, guide roller 804 is provided on one side of the chute 803, and guide bearing 805 is provided on the other side of the chute 803, the guide bearing 805 is sleeved on the pin shaft 11 on the fixing leg 204. The guide bearing 805 arranged to coordinate with the guide roller 804 to guide the vertical side 302 of the n-type gantry moving frame 3 to smoothly move up and down in the chute 803.

In order to guarantee the performances of the card-pushing sheet 5 and hook-type cutter 6, in the present invention, a cutter guide slot is further designed in the retaining clamp 8 to accommodate and guide the hook-type cutter 6, guide slots are respectively provided at the both sides of the cutter guide slot to accommodate and guide the card-pushing sheet 5. The above-mentioned two guide slots are not shown in the figures.

The folding clamp 9 comprises a crab claw 902, two reversely-extending lateral plates 903 are formed at both sides of the back of the crab claw 902 r, pin shaft holes 901 are provided at the end of the two lateral plates 903, said pin shaft holes 901 are aligned with the fixing hole 205 at the other side of the fixing leg 204 and then fixed by the pin shaft 11; the space between the two lateral plates 903 forms a slideway 904, which is adapt for accommodating the other foot pulley 303 on the vertical side of the n-type gantry moving frame 3.

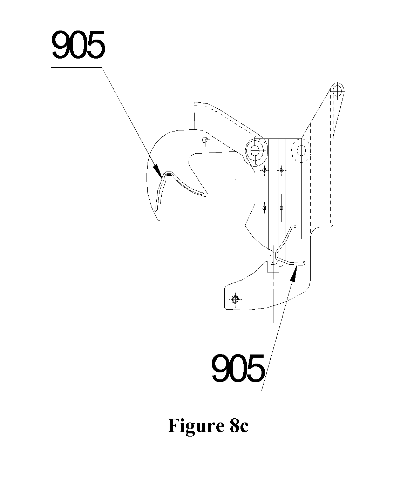

As shown in Fig. 8c, the folding clamp 9 has a material extrusion means 905 provided therein; the material extrusion means 905 has a claw sheet with a shape coordinating with the folding clamp, a width of the claw sheet is wider than that of the folding clamp. The function of the material extrusion means 905 is to extrude materials from the ends of cartridge to the center, when the folding clamp tucks, so that the central part is well-stacked for the convenient packaging at the later stage.

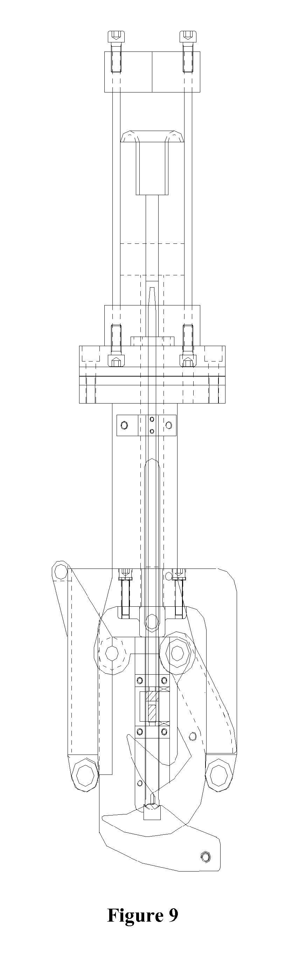

As shown in Fig. 9, the working process of the present invention is that: the air cylinder 101 pushes the n-type gantry moving frame 3 to move downward, and meanwhile, drives the card-pushing sheet 5, the hook-type cutter 6, the folding clamp 9 and card-pushing device 706 under the action of the spring 705 to act together, so that the card-pushing device 706 pushes cards to both sides of the remaining clamp 8, the folding clamp 9 tucks the casing, and the card-pushing sheet 5 pushes the card until the snap action is completed. When the air cylinder moves upward, the action moves conversely; the hook-type cutter 6 cuts down the casing, folding clamp 6 is released and charge pipe is discharged until the multi-purpose pin shaft 401 compresses the card-pushing device 706. The air cylinder 1 reciprocates once to complete a card-punching cycle.

According to above statement, embodiments of the present invention have been described in detail, but it is obviously to the skilled person in the art that, various modifications could be derived without departing from the spirits and the effects of the invention. Therefore, the modifications or alternations derived thereof are still included in the protection scope of the present invention.

## Claims

1. A continuous disc type card-punching device, comprising a rotary punching machine platform, which comprises a base with a rotation axis for driving the rotation of drive gear by a motor, a support plate provided at the top of the rotation axis;
the rotary punching machine platform also comprising a control system; wherein,
the support plate has at least two single-cylinder pneumatic punching machines provided thereon, startup and shutdown of each single-cylinder pneumatic punching machine are controlled by corresponding touch switches with respect to a first position and a second position.

2. The continuous disc type card-punching device of claim 1,
wherein, the touch switches comprising
a first mechanical valve for the first position,
a second mechanical valve for the second position, arranged to be side by side with the first mechanical valve;
a first touch block, arranged to correspond to the first mechanical valve, and
a second touch block, arranged to correspond to the second mechanical valve.

3. The continuous disc type card-punching device of claim 2 wherein,
the first mechanical valve and the second mechanical valve are fixed on a rotating disc;
the rotating disc is provided on a rotation axis and adapted for operating synchronously with the support plate;
the first touch block and the second touch block are fixed on a fixing plate.

4. The continuous disc type card-punching device of claim 1, wherein,
the touch switch is adapted for controlling the startup and the shutdown of the single-cylinder pneumatic punching machine at the first position and the second position respectively through a 2-positions 5-through holes double pneumatic control valve.

5. The continuous disc type card-punching device of claim 1, wherein,
at least one single-cylinder pneumatic card-punching machine is uniformly disposed at the inner ring of the support plate; and
at least two single-cylinder pneumatic card-punching machine are uniformly disposed at the outside ring of the support plate,
wherein, the diameter of the single-cylinder pneumatic card-punching machine disposed at the inner ring is larger than that at the outside ring.

6. The continuous disc type card-punching device of claim 1, wherein,
the rotary punching machine platform has a first detection means for detection of no volume state, a second detection means for detection of jammed volume state, and a detection means for detection of improper claw state provided thereon, all of which are connected to the control system.

7. The continuous disc type card-punching device of claim 1, wherein,
the single-cylinder pneumatic card-punching machine, comprising an air cylinder adapted for pushing a gantry moving frame to move downward and meanwhile driving a snap action moving device, a card-pushing sheet and a cutter to move down, and tuck a retaining clamp and a folding clamp until the card punching is completed, and adapted for driving the card-pushing sheet and cutter to move upward and releases the folding clamp when the gantry moving frame moves up, thereby completing a punching process.

8. The continuous disc type card-punching device of claim 7, wherein,
a connecting frame is connected to a working end face of the air cylinder, and a lower part of the connecting frame has connecting plates provided at both sides thereof,
the lower part of the connecting frame has an n-type gantry moving frame provided in the middle thereof in an interleaved manner,
a piston rob of the air cylinder is arranged to extend through the connecting frame to connect with the n-type gantry moving frame;
a retaining clamp and a folding clamp are provided at the bottom of the connecting frame.

9. The continuous disc type card-punching device of claim 8, wherein,
the folding clamp has a material extrusion means provided therein; the material extrusion means has a claw sheet with a shape coordinating with the folding clamp, a width of the claw sheet is wider than that of the folding clamp.

10. The continuous disc type card-punching device of claim 8, wherein,
a card-pushing sheet and a cutter are disposed under the n-type gantry moving frame,
a lower end of the n-type gantry moving frame has pulleys provided at both sides thereof, the pulleys are adapted for sliding in slideways of the retaining clamp and the folding clamp respectively;
the connecting frame has snap action moving devices provided at both sides thereof, and the snap action moving device and the n-type gantry moving frame are arranged in a square crossing manner;
the connecting frame comprises a base plate, fixed at a working end of the cylinder by bolted connection, both sides of the lower surfaces of the base plate respectively have an integrated connecting plate provided thereon, a lower end of the connection plate has biforked fixing legs; and the connecting plate is in the shape of an inverted Y, the fixing legs have fixing holes provided thereon, and a central hole is provided at a central section of the base plate for a piston rod to pass through;
rail holes are provided on the surfaces of connecting plates at both sides;
a multipurpose pin shaft is provided between the rail holes on the connecting plates at both sides, the multipurpose pin shaft is adapted for moving up and down in the rail holes, and the multipurpose pin is located under the n-type gantry moving frame;
a fixed block is provided on the multipurpose pin, the card-pushing sheet and the cutter are assembled on the fixed block.

11. The continuous disc type card-punching device of claim 10, wherein,
the cutter is in hook-type or cut-type.

12. The continuous disc type card-punching device of claim 10, wherein,
the retaining clamp and the folding clamp are coordinated with each other in an embedded manner, and the retaining clamp is in claw type,
two pin shaft holes are provided on two top ends of the retaining clamp, the pin shaft holes are aligned with fixing holes in the connecting frame and fixed by pin shaft;
a guide block is provided on one side of the retaining clamp, a chute is provided in the guide block, the chute is adapted for accommodating a foot pulley provided on a vertical side of the n-type gantry moving frame,
a snap molding is embedded in a corner of the retaining clamp.

13. The continuous disc type card-punching device of claim 12, wherein,
the guide block and the retaining clamp are arranged in an interleaved embedded manner, the guide block is arranged to abut against the retaining clamp;
a guide roller is provided on one side of the chute, and
a guide bearing is provided on the other side of the chute, the guide bearing is sleeved on the pin shaft disposed on the fixing leg and arranged to coordinated with the guide roller to guide the vertical side of the n-type gantry moving frame move up and down in the chute;
a cutter guide slot is provided in the retaining clamp for accommodating and guiding the hook-type cutter,
guide slots are respectively provided at the both sides for accommodating and guiding the card-pushing sheet.

14. The continuous disc type card-punching device of claim 10, wherein,
the folding clamp comprises a crab claw, two reversely-extending lateral plates are formed at both back sides of the crab claw,
pin shaft holes are provided at the ends of the lateral plates, the pin shaft holes are aligned with the fixing holes at the other side of the connecting frame and fixed by the pin shaft;
a space between the two lateral plates forms a sildeway, the slideway is adapted for accommodating another foot pulley on the n-type gantry moving frame.

15. The continuous disc type card-punching device of claim 10, wherein,
the snap action moving device comprises a U-shape guide rail which is formed by two L-shape lower parts connected and respectively located on the left and right sides, the vertical side of the L-shape guide rail is fixed on one side of the base plate of the connecting frame, and also fixed on the connecting plate which is on the lower surface of the connecting frame through a rail supporting frame,
a snap guide device is provided on one end of the vertical side of the L-shape guide rail,
a mounting plate is provided on the inner side of the L-shape guide rail, the rail supporting frame is fixed at the top of the mounting plate,
a strip hole is provided in the central section of the mounting plate,
a spring is provided in the upper part of the inner strip hole,
a card-punching device is assembled in the strip hole of the mounting plate through a pin shaft and a bearing, and arranged to keep compressing the spring by the multipurpose pin to deliver snap; the end of the horizontal side of the L-shape guide slot is fixed to the retaining clamp or folding clamp together by a guide slot fixed block and a mounting plate.

16. The continuous disc type card-punching device of claim 15, wherein,
a card-punching retaining device is provided under the card-punching device, and the card-punching retaining device is assembled on the card-punching guide rail and the mounting plate,
a snap retaining block is provided under the bottom of the card-punching retaining device and/or the card-punching device.
